# EUROPÄISCHE PATENTANMELDUNG

(11) **EP 0 946 059 A2**
(43) Veröffentlichungstag der Anmeldung: **29.09.1999**
(21) Anmeldenummer: 98122737.4
(22) Anmeldetag: 30.11.1998
(51) Int. Cl.: H04N 7/14

(54) **Verfahren zur Übertragung von Videodaten mit Mobilfunkgeräten**

(30) Priorität: 26.03.1998 DE 19813412
(71) Anmelder: ROBERT BOSCH GMBH, 70442 Stuttgart (DE)
(72) Erfinder: Fischer, Ralf, 31162 Bad Salzdetfurth (DE)

(57) **Zusammenfassung**

Es wird ein Verfahren zur Übertragung von Videodaten mit Mobilfunkgeräten (1, 15) vorgeschlagen. Durch eine Kamera (5) aufgezeichnete Videodaten werden in einem Mobilfunkgerät (1) codiert. Eine Datenrate der codierten Videodaten wird an die Datenrate eines der Übertragung der Videodaten zugeordneten ersten physikalischen Datenkanals (10) angepaßt. Die codierten Videodaten werden mit der angepaßten Datenrate in dem ersten physikalischen Datenkanal (10) vom Mobilfunkgerät (1) an eine Zielstation (15, 20) adressiert abgestrahlt.

## Beschreibung

### Stand der Technik

Die Erfindung geht von einem Verfahren zur Übertragung von Videodaten mit Mobilfunkgeräten nach der Gattung des Hauptanspruches aus.

Aus der Spezifikation 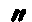 Universal Mobile Telecommunication System (UMTS), Service Aspects; Service Principles, UMTS, 22.01, Version 3.2.1" vom Januar 1998 ist es bekannt, dem Benutzer eines Mobilfunkgerätes sogenannte generische Trägerdienste zur Verfügung zu stellen. Damit kann sich der Benutzer einen Kanal entsprechend seinen Anforderungen an Übertragungsrate, Bitfehlerrate und Verzögerung der Übertragung definieren und über diesen Kanal einen speziellen Dienst oder eine spezielle Applikation betreiben, beispielsweise die Übertragung von Videodaten. Die Verzögerung der Übertragung ist dabei zur Korrektur einer fehlerhaften Übertragung erforderlich.

Für die Übertragung von sogenannten Multimediadaten, die Audiodaten, Videodaten und sonstige Daten umfassen können, in Festnetzen gibt es von der International Telecommunication Union (ITU) die ITU-T Standards H. 320 für das Integrated Services Data Network (ISDN), H. 324 für das Public Switch Telephone Network (PSTN) und H. 323 für das Internet. Für Multimedia-Terminals, die an solche Festnetze angeschlossen sind, gibt es wiederum Standards für die jeweiligen Einzelkomponenten der Multimedia-Terminals, beispielsweise die ITU-T-Standards H.263 für die Codierung und Decodierung von Videodaten, G.723 für die Codierung und Decodierung von Audiodaten im PSTN und im Internet, H. 223 für das Multiplexen und Demultiplexen der Multimediadaten im PSTN, H. 221 für das Multiplexen und Demultiplexen der Multimediadaten im ISDN, H. 225 für das Multiplexen und Demultiplexen der Multimediadaten im Internet und H. 245 für die Steuerung des Multiplexens und Demultiplexens der Multimediadaten im PSTN oder Internet. Beim Multiplexen gemäß den genannten Standards werden dabei Audiodaten, Videodaten und sonstige zu übertragende Daten zu einem gemeinsamen Datenbitstrom zusammengefaßt, so daß eine nachfolgende Kanalcodierung zum Fehlerschutz auf die fehlerempfindlichste Multimediaanwendung angepaßt sein sollte.

### Vorteile der Erfindung

Das erfindungsgemäße Verfahren mit den Merkmalen des Hauptanspruchs hat demgegenüber den Vorteil, daß eine Datenrate der codierten Videodaten an die Datenrate eines der Übertragung der Videodaten zugeordneten ersten physikalischen Datenkanals angepaßt wird und daß die codierten Videodaten mit der angepaßten Datenrate in dem ersten physikalischen Datenkanal vom Mobilfunkgerät an eine Zielstation adressiert abgestrahlt werden. Auf diese Weise ist eine Multiplexeinrichtung zur Erzeugung eines gemeinsamen Datenbitstroms und eine Steuerung für eine solche Multiplexeinrichtung nicht erforderlich, da die codierten Videodaten in einem eigenen, ihnen zugeordneten physikalischen Datenkanal vom Mobilfunkgerät abgestrahlt werden. Somit können der Hardwareaufwand im Mobilfunkgerät reduziert, die Komplexität verringert und Kosten eingespart werden.

Ein weiterer Vorteil besteht darin, daß der beispielsweise für die Videodatenübertragung erforderliche vergleichsweise hohe Fehlerschutz nicht auch für andere Datenübertragungen mit geringerer Anforderung an Fehlerschutz bei gemeinsamer Übertragung in einem gemeinsamen Datenbitstrom realisiert sein muß und somit die erforderliche Datenrate und Bandbreite für die Übertragung der Multimediadaten reduziert werden kann.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es dabei, daß durch ein Mikrofon aufgezeichnete Audiodaten im Mobilfunkgerät codiert werden, daß eine Datenrate der codierten Audiodaten an die Datenrate eines der Übertragung der Audiodaten zugeordneten zweiten physikalischen Datenkanals angepaßt wird und das die codierten Audiodaten mit der angepaßten Datenrate in dem zweiten physikalischen Datenkanal vom Mobilfunkgerät an eine der Zielstationen adressiert abgestrahlt werden. Auf diese Weise können die vom Mobilfunkgerät abgestrahlten Video- und Audiodaten in voneinander getrennten Kanälen vom Mobilfunkgerät abgestrahlt werden. Der Fehlerschutz für die Übertragung der Audiodaten muß dabei nicht an den Fehlerschutz für die Übertragung der Videodaten angepaßt werden, so daß die Audiodaten mit weniger Fehlerschutz übertragen werden können und somit Bandbreite für die Übertragung der Audiodaten eingespart werden kann.

Ein weiterer Vorteil besteht darin, daß die Audiodaten in dem zweiten physikalischen Datenkanal von der Basisstation empfangen werden, das die Audiodaten für eine Übertragung im Festnetz transcodiert werden und das die transcodierten Audiodaten mit den Videodaten in einen gemeinsamen Datenbitstrom gemultiplext und über die Datenleitung an das Festnetz weitergeleitet werden. Auf diese Weise ist eine Transcodierung der Audiodaten im Mobilfunkgerät nicht erforderlich und kann in der Basisstation zentralisiert für mehrere Mobilfunkgeräte angeordnet werden, so daß in den Mobilfunkgeräten der Hardwareaufwand weiter reduziert, die Komplexität verringert und die Kosten gesenkt werden können.

Ein weiterer Vorteil besteht darin, daß mindestens ein weiterer Datendienst, insbesondere Fax, vorgesehen ist und daß die zugehörigen Daten in einem dritten physikalischen Datenkanal vom Mobilfunkgerät abgestrahlt werden. Auf diese Weise können auch diese Daten von den Video- und den gegebenenfalls vorhandenen Audiodaten kanalmäßig getrennt vom Mobilfunkgerät abgestrahlt werden und brauchen in ihrem Kanal nur mit dem für ihre Übertragung erforderlichen Fehlerschutz versehen werden, so daß ein Minimum an Bandbreite für die Übertragung der Multimediadaten ausreicht.

### Zeichnungen

Ein Ausführungsbeispiel der Erfindung ist in der Zeichnung dargestellt und in der nachfolgenden Beschreibung näher erläutert. Es zeigen Figur 1 ein Blockschaltbild eines Mobilfunkgerätes, Figur 2 ein Blockschaltbild einer Basisstation, die über ein Festnetz mit einer Zielstation verbunden ist, Figur 3 eine Kanalcodierung für die Übertragung von Audiodaten, Figur 4 eine Kanalcodierung für die Übertragung von Videodaten, Figur 5 eine spektrale Verteilung von Datenkanalen zur Übertragung von Multimediadaten und Figur 6 ein Blockschaltbild möglicher Übertragungsstrecken.

### Beschreibung des Ausführungsbeispiels

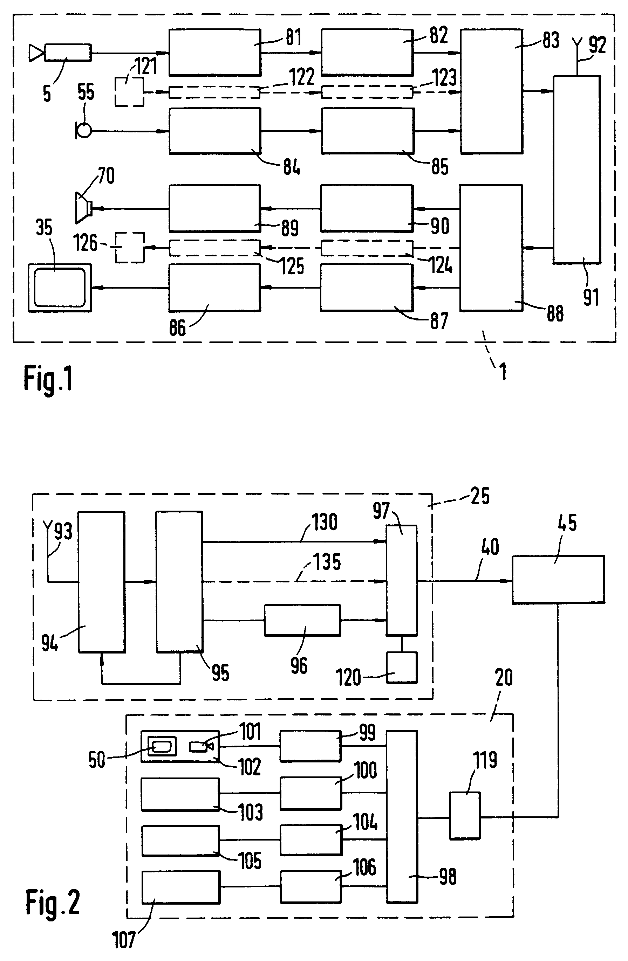

In Figur 1 kennzeichnet 1 ein Mobilfunkgerät. Das Mobilfunkgerät 1 umfaßt eine erste Kamera 5, die über einen Video-Quellcodierer 81 und einen Video-Kanalcodierer 82 an einen Frequenzmultiplexer 83 angeschlossen ist. Das Mobilfunkgerät 1 umfaßt weiterhin einen ersten Monitor 35, der über einen Video-Quelldecodierer 86 und einen Video-Kanaldecodierer 87 an einen Frequenzdemultiplexer 88 angeschlossen ist. Das Mobilfunkgerät 1 umfaßt weiterhin ein Mikrofon 55, das über einen Audio-Quellcodierer 84 und einen Audio-Kanalcodierer 85 mit dem Frequenzmultiplexer 83 verbunden ist. Das Mobilfunkgerät 1 umfaßt weiterhin einen Lautsprecher 70, der über einen Audio-Quelldecodierer 89 und einen Audio-Kanaldecodierer 90 mit dem Frequenzdemultiplexer 88 verbunden ist. Der Frequenzmultiplexer 83 und der Frequenzdemultiplexer 88 sind an eine erste Sende-/Empfangseinheit 91 angeschlossen. An die erste Sende-/Empfangseinheit 91 ist eine erste Sende-/Empfangsantenne 92 angeschlossen.

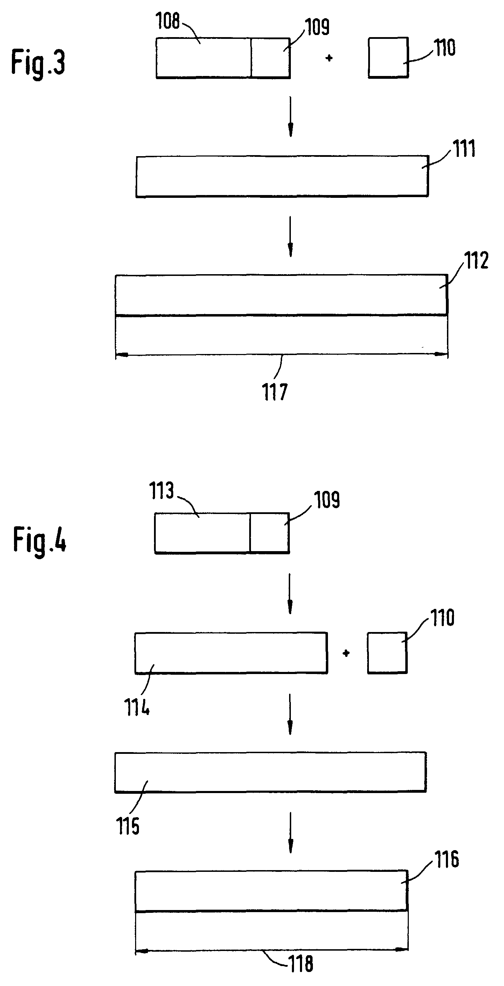

Von der ersten Kamera 5 aufgezeichnete Videodaten sind bei Verwendung einer digitalen Kamera digital oder werden andernfalls im Video-Quellcodierer 81 digitalisiert. Der Video-Quellcodierer 81 führt eine Datenkompression der digitalen Videodaten durch, so daß Übertragungsbandbreite gespart werden kann. Die auf diese Weise codierten Videodaten werden dann im Video-Kanalcodierer 82 einer Kanalcodierung zum Fehlerschutz für die anschließende Übertragung der Videodaten in einem Datenkanal unterzogen. Diese Kanalcodierung der Videodaten ist in Figur 4 dargestellt. Dabei werden die digitalen datenkomprimierten Videodaten durch das Bezugszeichen 113 gekennzeichnet und stellen die in einem Videodatenrahmen der Dauer 118 zu übertragenden Videodaten dar. Die Rahmendauer 118 für die Videodaten beträgt dabei beispielsweise 10 ms. Während dieser Dauer wird eine Datenmenge von 200 Bit der datenkomprimierten Videodaten 113 übertragen. Den datenkomprimierten Videodaten 113 werden dabei zur Fehlererkennung acht sogenannte Cyclic Redundancy Check (CRC)-Bits 109 angehängt. Diese werden beim zyklischen Durchlauf der datenkomprimierten Videodaten 113 durch ein Schieberegister erzeugt und sind für die datenkomprimierten Videodaten 113 charakteristisch. Die datenkomprimierten Videodaten 113 und die CRC-Bits 109 werden dann einer ersten Fehlerschutzcodierung unterzogen. Dabei kann es sich beispielsweise um ein blockorientiertes Fehlerschutzverfahren handeln, das eine Korrektur von Büschel- oder Bündelfehlern, also von aufeinander folgenden Bitfehlern ermöglicht, wie sie beispielsweise bei zeitweiligen Funkabschattungen bei der Abstrahlung vom Mobilfunkgerät 1, beispielsweise beim Durchfahren eines Tunnels auftreten können. Zur blockorientierten Fehlerkorrektur kann beispielsweise der Reed- Solomon- Code verwendet werden. Die Codierungsrate beträgt dabei 4/5, so daß die Reed- Solomon- codierten Videodaten, die in Figur 4 mit dem Bezugszeichen 114 gekennzeichnet sind, eine Datenmenge von 260 Bits aufweisen. Diesen werden im beschriebenen Beispiel acht Stopfbits 110 mit beliebiger Information hinzugefügt, um eine anschließende Faltungscodierung als zweites Fehlerschutzverfahren durchführen zu können. Die Faltungscodierung kann dabei optimal zur Korrektur von gleichmäßig verteilten Einzelfehlern in der Bitfolge verwendet werden. Die Codierungsrate für die Faltungscodierung beträgt dabei 1/3, so daß die mit dem Bezugszeichen 115 gekennzeichneten resultierenden faltungscodierten Videodaten eine Datenmenge von 804 Bits aufweisen. Bei einer Rahmendauer 118 für die Videodaten von 10 ms würde dies eine Datenrate von 80,4 kBit / s erfordern. Zur Verfügung stehende Datenkanäle weisen jedoch üblicherweise Datenraten von 2ⁿkBit / s auf, wobei n ganzzahlig ist. Die nächstliegende Datenrate wäre also 64 kBit / s . Bei der Verwendung eines Datenkanals mit einer Datenrate von 128 kBit / s würde unnötig Bandbreite für die Videodatenübertragung beansprucht. Daher erfolgt eine Anpassung der faltungscodierten Videodaten 115 an den von der Datenrate her naheliegensten Datenkanal durch eine Auspunktierung des Datenstroms auf 64 kBit / s Bei einer solchen Auspunktierung werden an definierten Stellen der Bitfolge Bits weggelassen. Eine solche Auspunktierung führt zwar zu einer Verringerung der Redundanz und damit zu einer schlechteren Fehlerkorrigierbarkeit, doch ist die nach Auspunktierung sich ergebende Restfehlerrate immer noch kleiner als eine Restfehlerrate von 10⁻⁴ , die für die Übertragung von Videodaten bereits ausreichend ist. Auf diese Weise ergeben sich nach Auspunktierung der faltungscodierten Videodaten 115 die mit dem Bezugszeichen 116 gekennzeichnete auspunktierten Videodaten, deren Datenmenge 640 Bit beträgt und die damit aufgrund der Rahmendauer 118 für die Videodaten von 10 ms mit der Datenrate 64 kBit / s in einem physikalischen Datenkanal übertragen werden können.

Die beiden Fehlerschutzverfahren der Reed- Solomon-Codierung und der Faltungscodierung führen also zu einer erforderlichen Datenrate für die Übertragung der Videodaten, die ungefähr 3 mal so groß ist, wie die für die Übertragung der datenkomprimierten Videodaten 113 erforderliche Datenrate. Anstelle der beschriebenen Fehlerschutzverfahren kann es deshalb auch vorgesehen sein, bei Erkennung von Übertragungsfehlern seitens des Empfängers eine Wiederholung der Übertragung beim Sender zu veranlassen. Bei einem solchen Verfahren kann die für die Fehlerschutzverfahren erforderliche Bandbreite eingespart werden, wobei jedoch aufgrund möglicher Übertragungswiederholungen eine Verzögerung beim Datenempfang auftreten kann. Die Detektion von Fehlern in einer empfangenen Bitfolge kann beim Empfänger aufgrund der CRC-Bits erfolgen. Bei Detektion solcher Fehler kann der Empfänger dann an den Sender eine Wiederholungsaufforderung übertragen, um eine Wiederholung der Datenübertragung zu veranlassen. Die im Empfänger empfangenen datenkomprimierten Videodaten 113 werden dabei wieder zyklisch durch das gleiche Schieberegister geschoben, das auch im Sender zur Erzeugung der CRC-Bits 109 verwendet wird. Die dabei im Empfänger gebildeten Bits werden mit den übertragenen CRC-Bits 109 verglichen, so daß der Empfänger bei Nichtübereinstimmung eine fehlerhafte Übertragung detektiert.

Das Mobilfunkgerät 1 kann nur zum Senden und Empfangen von Videodaten ausgelegt sein, wobei die auspunktierten Videodaten 116 dann direkt vom Video-Kanalcodierer 82 an die erste Sende-/Empfangseinheit 91 weitergeleitet und von dort über die erste Sende-/Empfangsantenne 92 an eine Zielstation adressiert abgestrahlt werden können. Die Adressierung einer Zielstation kann dabei an einer in Figur 1 nicht dargestellten Eingabeeinheit seitens eines Benutzers erfolgen und mit den Videodaten in Form von Adressdaten abgestrahlt werden. Anhand der Adressdaten ist dann eine Zielstation eindeutig identifizierbar. Ein Mobilfunkgerät 1, das lediglich zur Übertragung von Videodaten vorgesehen ist, kann beispielsweise für eine Videoüberwachung eingesetzt werden.

Das Mobilfunkgerät 1 kann jedoch auch zur Übertragung von Audiodaten verwendet werden. Dies ist gemäß Figur 1 auch so vorgesehen. Vom Mikrofon 55 aufgezeichnete Audiodaten werden dabei im Audio-Quellcodierer 84 zunächst digitalisiert und dann ebenfalls zur Einsparung von Bandbreite komprimiert. Im Audio-Kanalcodierer 85 erfolgt dann ebenfalls eine Fehlerschutzcodierung der Audiodaten, die gemäß Figur 3 näher beschrieben wird.

In Figur 3 kennzeichnet 108 die datenkomprimierten Audiodaten, beispielsweise mit einer Datenmenge von 80 Bits. Eine Rahmendauer 117 für die Audiodaten beträgt dabei ebenfalls beispielsweise 10 ms. Den datenkomprimierten Audiodaten 108 sind wieder acht CRC-Bits 109 hinzugefügt. Da die Übertragung von Audiodaten nicht so störanfällig wie die Übertragung von Videodaten ist, kann auf blockorientierten Fehlerschutz verzichtet werden und als Fehlerschutz lediglich eine Faltungscodierung verwendet werden. Zur Verringerung der Fehlerrate kann jedoch jederzeit auch zusätzlich ein blockorientiertes Fehlerschutzverfahren Anwendung finden, wodurch jedoch mehr Bandbreite für die Übertragung beansprucht wird. Da gemäß dem in Figur 3 beschriebenen Ausführungsbeispiel auf die blockorientierte Fehlerschutzcodierung verzichtet wird, werden den datenkomprimierten Audiodaten 108 und den CRC-Bits 109 gleich acht Stopfbits 110 hinzugefügt, um die für die Faltungscodierung erforderliche Bitzahl zur Verfügung zu stellen. Bei der Codierungsrate 1/3 für die Faltungscodierung ergibt sich dann eine Datenmenge von 288 Bits für die mit dem Bezugszeichen 111 gekennzeichneten faltungscodierten Audiodaten. Die nächstliegende Datenrate eines physikalischen Datenkanals beträgt 32 kBits / s so daß die faltungscodierten Audiodaten 111 durch Hinzufügen von Bits auf eine Datenmenge von 320 Bits erweitert werden und somit an die Datenrate von 32 kBit / s bei der gewählten Rahmendauer 117 für die Audiodaten angepaßt sind. Die an die Datenrate angepaßten Audiodaten sind in Figur 3 mit dem Bezugszeichen 112 gekennzeichnet. Eine Auspunktierung der faltungscodierten Audiodaten 111 zur Realisierung der nächst niedrigeren Datenrate von 16 kBit / s würde aufgrund des damit verbundenen Datenverlustes unter Umständen eine zu hohe Fehlerrate zur Folge haben.

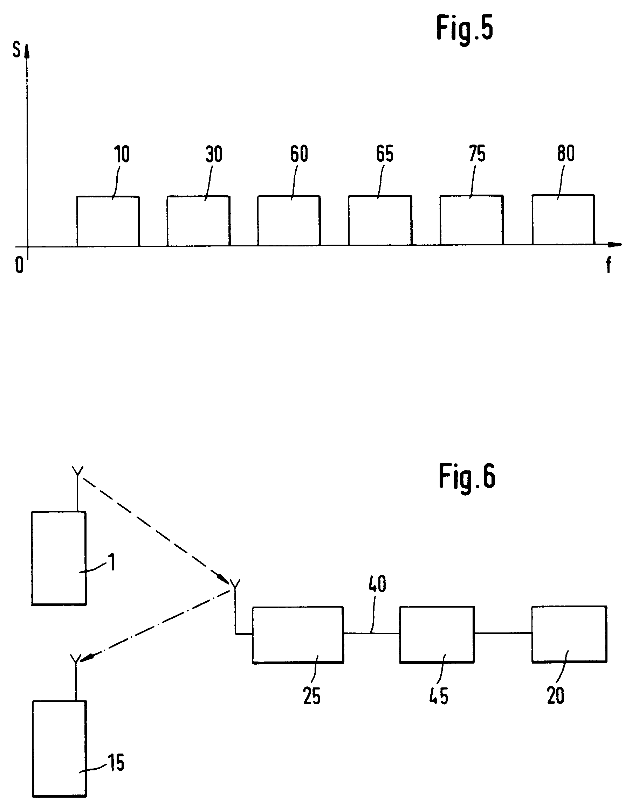

Werden vom Mobilfunkgerät 1 sowohl Audio- als auch Videodaten übertragen, so ist der Frequenzmultiplexer 83 erforderlich, der den Videodaten für die Übertragung einen ersten physikalischen Datenkanal 10 und den Audiodaten einen vom ersten physikalischen Datenkanal 10 getrennten zweiten physikalischen Datenkanal 30 zuweist. Dabei ist gemäß Figur 5 eine spektrale Verteilung S von sechs voneinander getrennten physikalischen Datenkanälen 10, 30, 60, 65, 75, 80 über der Frequenz f dargestellt. Gemäß dem Beispiel nach Figur 5 ist dabei der zweite physikalische Datenkanal 30 dem ersten physikalischen Datenkanal 10 zu höheren Frequenzen hin direkt und nicht überlappend benachbart.

Durch gestrichelte Linien ist in Figur 1 angedeutet, daß alternativ oder zusätzlich zur Übertragung von Audiodaten auch Daten eines weiteren Datendienstes zusammen mit den Videodaten übertragen werden können. Dabei kann es sich beispielsweise um einen Telefaxdienst handeln. Dabei kennzeichnet das Bezugszeichen 121 eine Datenquelle eines solchen Datendienstes oder einer solchen Datenanwendung, die über einen Quellcodierungsblock 122 und einen Kanalcodierungsblock 123 für diese Datenanwendung mit dem Frequenzmultiplexer 83 verbunden ist. Eine Datensenke 126 dieser Datenanwendung ist über einen Quelldecodiererblock 125 und einen Kanaldecodiererblock 124 für die Datenanwendung mit dem Frequenzdemultiplexer 88 verbunden. Quellcodierung und Kanalcodierung für Daten einer solchen Datenanwendung erfolgen dabei in der bereits für Video- und Audiodaten beschriebenen Weise, wobei die Datenmenge und die resultierende Datenrate für die Übertragung von der gewählten Datenanwendung abhängt. Da Datendienste immer fehlerfrei sein müssen, werden als Fehlerschutz Kombinationen aus Fehlerschutzverfahren, wie zum Beispiel Reed-Solomon-Codierung oder Faltungscodierung und der Wiederholung fehlerhafter Übertragung verwendet. Die Quellcodierung hängt von der jeweiligen Datenanwendung ab.

Der Datenanwendung wird dann vom Frequenzmultiplexer 83 ein dritter physikalischer Datenkanal 60 gemäß Figur 5 zugeordnet, der dem zweiten physikalischen Datenkanal 30 zu höheren Frequenzen hin benachbart angeordnet ist, ohne mit diesem zu überlappen.

Weitere Datenanwendungen können in der beschriebenen Weise hinzugefügt und deren Daten in einem eigenen zugewiesenen physikalischen Datenkanal übertragen werden.

Das Mobilfunkgerät 1 kann auch nur zum Senden vorgesehen sein, so daß auf den Frequenzdemultiplexer 88 und die nachfolgenden Empfangsstufen verzichtet werden kann. Es kann jedoch auch vorgesehen sein, eine beliebige Mischung von zu sendenden und zu empfangenden Datendiensten im Mobilfunkgerät 1 vorzusehen. So kann das Mobilfunkgerät 1 beispielsweise lediglich zum Aussenden von Videodaten und zum Empfangen von Audiodaten ausgebildet sein. Somit sind auch nur die für diese Anwendungen im Mobilfunkgerät 1 erforderlichen Funktionsblöcke, nämlich der Video-Quellcodierer 81, der Video-Kanalcodierer 82, der Audio-Kanaldecodierer 90, der Audio-Quelldecodierer 89, die erste Kamera 5, der Lautsprecher 70, die erste Sende-/Empfangseinheit 91 und die erste Sende-/Empfangsantenne 92 sowie weitere zum Betrieb des Mobilfunkgerätes 1 notwendige jedoch für die Beschreibung der Erfindung nicht relevante und daher in Figur 1 nicht dargestellte Bauteile erforderlich.

Die Audiodaten und/oder die Daten der weiteren Datenanwendung werden entsprechend den Videodaten an eine Zielstation adressiert von der ersten Sende-/Empfangsantenne 92 abgestrahlt.

Anstelle eines Freguenzmultiplexers 83 bzw. eines Frequenzdemultiplexers 88 kann auch ein Zeitmultiplexer bzw. ein Zeitdemultiplexer verwendet werden. Die Video- und die Audiodaten sowie die Daten weiterer Datenanwendungen werden dann nicht frequenzmultiplex wie in Figur 5 dargestellt sondern in einem Zeitschlitzverfahren übertragen.

In Figur 2 kennzeichnet 25 eine Basisstation. Die Basisstation 25 umfaßt eine zweite Sende-/Empfangseinheit 94, an die eine zweite $ende-/Empfangsantenne 93 angeschlossen ist und die andererseits mit einem ersten Multiplexer/Demultiplexer 95 verbunden ist. Dabei kann die zweite Sende-/Empfangseinheit 94 von der zweiten Sende-/Empfangsantenne 93 empfangene Signale an den ersten Multiplexer/Demultiplexer 95 weiterleiten und von diesem wieder Signale zur Abstrahlung über die zweite Sende-/Empfangsantenne 93 empfangen. Der erste Multiplexer/Demultiplexer 95 ist in der Lage, von der zweiten Sende-/Empfangsantenne 93 und der zweiten Sende-/Empfangseinheit 94 empfangene Signale zu demultiplexen und empfangene Videodaten über eine Videoleitung 130 direkt an einen Datenbitstrommultiplexer 97 weiterzuleiten. Empfangene Audiodaten werden hingegen vom ersten Multiplexer/Demultiplexer 95 über einen Transcodierer 96 an den Datenbitstrommultiplexer 97 weitergeleitet. In Figur 2 ist mit einem gestrichelten Pfeil, der mit dem Bezugszeichen 135 gekennzeichnet ist, eine Datenverbindung dargestellt, über die empfangene Daten einer weiteren Datenanwendung vom ersten Multiplexer/Demultiplexer 95 direkt an den Datenbitstrommultiplexer 97 weitergeleitet werden können. Gegebenenfalls ist jedoch auch für die empfangenen Videodaten und/oder Daten einer anderen Datenanwendung vor Weiterleitung an den Datenbitstrommultiplexer 97 eine Transcodierung erforderlich. Der Datenbitstrommultiplexer 97 der Basisstation 25 ist über eine Datenleitung 40 mit einem Festnetz 45 verbunden, an das eine zweite Zielstation 20 angeschlossen ist, die in diesem Ausführungsbeispiel als schnurgebundenes Festnetzterminal ausgebildet ist. Das Festnetz 45 kann als ISDN, als PSTN oder als Internet ausgebildet sein. Die zweite Zielstation 20 ist über ein Modem 119 an das Festnetz 45 angeschlossen. Die zweite Zielstation 20 umfaßt eine Videoausrüstung 102 mit einem zweiten Monitor 50 und einer zweiten Kamera 101. Die Videoausrüstung 102 ist über ein Videocodec 99 mit einem zweiten Multiplexer/Demultiplexer 98 verbunden, an den das Modem 119 angeschlossen ist. Die zweite Zielstation 20 umfaßt weiterhin eine Audioausrüstung, die ein Mikrofon und einen Lautsprecher umfassen kann. Die Audioausrüstung 103 ist über ein Audiocodec 100 mit dem zweiten Multiplexer/Demultiplexer 98 verbunden. Die zweite Zielstation 20 umfaßt weiterhin Datenanwendungen 105, die über einen Datenprotokollwandler 104 mit dem zweiten Multiplexer/Demultiplexer 98 verbunden sind. Die zweite Zielstation 20 umfaßt weiterhin eine Systemsteuerung 107, die über Steuerungsprotokolle 106 dem zweiten Multiplexer/Demultiplexer 98 die gewünschte Übertragungsart mitteilen kann und somit den zweiten Multiplexer/Demultiplexer 98 steuert. Dabei kann die Systemsteuerung 107 den zweiten Multiplexer/Demultiplexer 98 beispielsweise dazu ansteuern, Faxdaten eines vom Benutzer an einer in Figur 2 nicht dargestellten Eingabeeinheit gewählten Faxdienstes der Datenanwendungen 105 gegebenenfalls zusammen mit Video- und/oder Audiodaten in einen Gesamtdatenbitstrom zu multiplexen und über das Festnetz 45 an einen adressierten Teilnehmer zu senden. In diesem Fall würde die zweite Zielstation 20 als Quellstation fungieren.

Der Videocodec 99 umfaßt die Funktionalität des Video-Quellcodierers 81, des Video-Kanalcodierers 82, des Video-Quelldecodierers 86 und des Video-Kanaldecodierers 87. Der Audiocodec 100 umfaßt die Funktionalität des Audio-Quellcodierers 84, des Audio-Kanalcodierers 85, des Audio-Quelldecodierers 89 und des Audio-Kanaldecodierers 90. Vom Mobilfunkgerät 1 abgestrahlte Videodaten werden an der zweiten Sende-/Empfangseinheit 94 im ersten physikalischen Datenkanal 10 empfangen. Vom Mobilfunkgerät 1 abgestrahlte Audiodaten werden von der zweiten Sende-/Empfangseinheit 94 im zweiten physikalischen Datenkanal 30 empfangen. Vom Mobilfunkgerät 1 abgestrahlte Daten einer weiteren Datenanwendung werden von der zweiten Sende-/Empfangseinheit 94 im dritten physikalischen Datenkanal 60 empfangen. Die vom Mobilfunkgerät 1 in der zweiten Sende-/Empfangseinheit 94 empfangenen Daten werden an den ersten Multiplexer/Demultiplexer 95 weitergeleitet. Kennzeichnet die mit den Daten empfangene Adresse die zweite Zielstation 20, so werden die empfangenen Daten vom ersten Multiplexer/Demultiplexer 95 in die Videodaten, Audiodaten und Daten für die weitere Datenanwendung getrennt und über das Festnetz 45 an die zweite Zielstation 20 übertragen. Durch die Adresse kann jedoch auch eine erste Zielstation 15 gekennzeichnet sein, die gemäß Figur 6 ebenfalls als Mobilfunkgerät ausgebildet ist. Ist die erste Zielstation 15 von der Basisstation 25 erreichbar, so wird von der Basisstation 25 eine in Figur 6 strichpunktiert dargestellte Verbindung zur ersten Zielstation 15 aufgebaut. Figur 6 zeigt jedoch auch den Anschluß der zweiten Zielstation 20 an die Basisstation 25 über das Festnetz 45 und die Datenleitung 40, so daß in Figur 6 die in diesem Ausführungsbeispiel beschriebenen möglichen Übertragungswege vom Mobilfunkgerät 1 zur ersten Zielstation 15 oder zur zweiten Zielstation 20 dargestellt sind. Ist die erste Zielstation 15 adressiert, so gibt der erste Multiplexer/Demultiplexer 95 nach Auswertung der empfangenen Adressdaten, die vom Mobilfunkgerät 1 empfangenen Daten wieder an die zweite Sende-/Empfangseinheit 94 zurück und veranlaßt diese zur Abstrahlung der vom Mobilfunkgerät 1 empfangenen Daten an die erste Zielstation 15. Dabei kann gegebenenfalls eine Kanalumsetzung stattfinden, so daß die Videodaten in einem vierten physikalischen Datenkanal 65 von der Basisstation 25 an die erste Zielstation 15 übertragen werden, wobei der vierte physikalische Datenkanal 65 dem dritten physikalischen Datenkanal 60 zu höheren Frequenzen hin und nicht mit diesem überlappend benachbart ist. Die Audiodaten können dann von der Basisstation 25 in einem fünften physikalischen Datenkanal 75, der dem vierten physikalischen Datenkanal 65 zu höheren Frequenzen hin benachbart und nicht mit diesem überlappend ist, zur ersten Zielstation 15 übertragen werden. Die Daten der weiteren Datenanwendung können von der Basisstation 25 in einem sechsten physikalischen Datenkanal 80, der dem fünften physikalischen Datenkanal 75 zu höheren Frequenzen hin und nicht mit diesem überlappend benachbart ist, an die erste Zielstation 15 übertragen werden. Die Anordnung des vierten physikalischen Datenkanals 65, des fünften physikalischen Datenkanals 75 und des sechsten physikalischen Datenkanals 80 ist ebenfalls aus Figur 5 entnehmbar.

Da in diesem Ausführungsbeispiel die erste Zielstation 15 als Mobilfunkgerät ausgebildet ist, kann der Datenempfang anhand von Figur 1 beschrieben werden. Im Frequenzdemultiplexer 88 werden die von der Basisstation 25 in der ersten Sende-/Empfangseinheit 91 empfangenen Videodaten, Audiodaten und Daten der weiteren Datenanwendung voneinander getrennt. Im Video-Kanaldecodierer 87 findet dann anhand der realisierten Fehlerschutzverfahren der Reed-Solomon-Codierung und der Faltungscodierung eine Korrektur von erkannten Datenübertragungsfehlern statt. Im Video-Quelldecodierer 86 findet dann eine Expansion der im Video-Kanaldecodierer 87 ermittelten datenkomprimierten Videodaten statt, die anschließend am ersten Monitor 35 zur Darstellung gebracht werden können. Analog dazu führt der Audio-Kanaldecodierer 90 eine Fehlerkorrektur von erkannten Audiodatenübertragungsfehlern anhand der verwendeten Faltungscodierung durch. Im Audio-Quelldecodierer 89 werden dann die im Audio-Kanaldecodierer 90 ermittelten datenkomprimierten Audiodaten expandiert und zur akustischen Wiedergabe an den Lautsprecher 70 weitergeleitet. Entsprechend werden die empfangenen Daten der weiteren Datenanwendung im Kanaldecodiererblock 124 der Datenanwendung anhand des oder der verwendeten Fehlerschutzverfahren korrigiert und die auf diese Weise ermittelten datenkòmprimierten Daten im Quelldecodiererblock 125 der Datenanwendung expandiert und zur Wiedergabe an die Datensenke 126 der Datenanwendung weitergeleitet.

Für den Fall, daß die zweite Zielstation 20 adressiert wurde, werden die in der Basisstation 25 empfangenen Videodaten, Audiodaten und Daten der weiteren Datenanwendung vom Datenbitstrommultiplexer 97 zu einem einzigen Gesamtdatenbitstrom zusammengefaßt. Dieser Multiplexvorgang wird von einer Steuerung 120 der Basisstation 25 gesteuert, wobei die Steuerung 120 der Basisstation 25 an den Datenbitstrommultiplexer 97 angeschlossen ist. Der Gesamtdatenbitstrom wird dann über die Datenleitung 40 an das Festnetz 45 und von dort an die zweite Zielstation 20 übertragen und nach Empfang durch das Modem 119 im zweiten Multiplexer/Demultiplexer 98 wieder in die Videodaten, die Audiodaten und die Daten für die weitere Datenanwendung zerlegt. Die Decodierung und Wiedergabe der Daten in der zweiten Zielstation 20 erfolgt dann in der gemäß Figur 1 beschriebenen Weise, so daß beispielsweise in der zweiten Zielstation 20 empfangene Videodaten am zweiten Monitor 50 dargestellt werden können.

Umgekehrt kann natürlich die zweite Zielstation 20 auch als Quellstation dienen, die über das Modem 119 Videodaten und/oder Audiodaten und/oder Daten einer oder mehrerer anderer Datenanwendungen über das Festnetz 45 an über das Festnetz 45 erreichbare schnurgebundene oder schnurlose Zielstationen übertragen kann. Dazu ist die zweite Zielstation 20 zur Aufnahme von Videodaten mit der zweiten Kamera 101 ausgerüstet und kann in ihrer Audioausrüstung 103 neben einem Lautsprecher auch ein Mikrofon zur Audiosignalaufnahme umfassen. Neben Wiedergabevorrichtungen für Daten anderer Datenanwendungen können auch entsprechende Datenaufzeichnungsvorrichtungen für die anderen Datenanwendungen 105 in der zweiten Zielstation 20 vorgesehen sein.

Je nachdem, welche Daten von dem Mobilfunkgerät 1 in der Basisstation 25 empfangen werden und an die zweite Zielstation 20 adressiert sind, kann der Gesamtdatenbitstrom beispielsweise nur Videodaten, Videodaten und Audiodaten, Videodaten und Daten einer anderen Datenanwendung, Audiodaten und Daten einer anderen Datenanwendung, Videodaten, Audiodaten und Daten einer anderen Datenanwendung, u. s. w. enthalten.

Bei Verwendung des UMTS-Standards steht für die Übertragung der Videodaten vom Mobilfunkgerät 1 zur Basisstation 25 eine höhere Übertragungsrate zur Verfügung als dies beispielsweise nach dem GSM-Standard (Global System for Mobile communications) der Fall ist. Daher läßt sich also der Videodienst, der eine vergleichsweise hohe Datenrate erfordert, zur Übertragung von Videodaten sehr gut in den UMTS-Standard integrieren.

Die Videocodierung und -decodierung im Video-Quellcodierer 81, im Video-Kanalcodierer 82, im Video-Quelldecodierer 86 und im Video-Kanaldecodierer 87 sowie im Videocodec 99 kann gemäß dem ITU-T Standard H. 263 erfolgen. Die zweite Zielstation 20 kann gemäß dem ITU-T Standard H. 324 realisiert sein, wobei der Audiocodec 100 gemäß dem ITU-T Standard G.723 ausgebildet sein kann, der speziell für Festnetze geschaffen wurde. Da für die Sprachübertragung in mobilen Netzen höhere Anforderungen an Fehlerschutzmaßnahmen gestellt werden, sind der Audio-Quellcodierer 84, der Audio-Kanalcodierer 85, der Audio-Quelldecodierer 89 und der Audio-Kanaldecodierer 90 nach einem speziellen Mobilfunkstandard ausgebildet, so daß bei Adressierung der zweiten Zielstation 20 eine Transcodierung der Audiodaten im Transcodierer 96 vom Mobilfunkstandard in den G.723 Standard erforderlich ist. Dabei kann die Transcodierung in der Basisstation 25 eine Transcodierung in den in einer Funkzelle der Basisstation 25 befindlichen Mobilfunkgeräten kosten- und aufwandsparend ersetzen.

Der ITU-T Standard H.324, nach dem die zweite Zielstation 20 ausgebildet ist, ist für den Anschluß der zweiten Zielstation 20 an ein als PSTN ausgebildetes Festnetz 45 vorgesehen. Wird die zweite Zielstation 20 an ein als ISDN ausgebildetes Festnetz 45 angeschlossen, so ist für die zweite Zielstation 20 der ITU-T Standard H.320 anzuwenden. Wird die zweite Zielstation 20 an ein als Internet ausgebildetes Festnetz 45 angeschlossen, so ist für die Ausbildung der zweiten Zielstation 20 der ITU-T Standard H.323 zu realisieren. Für den zweiten Multiplexer/Demultiplexer 98 ist im PSTN der ITU-T Standard H.223, im ISDN der ITU-T Standard H.221 und im Internet der ITU-T Standard H.225 zugrunde zu legen. Im Internet und im PSTN ist für die Steuerungsprotokolle 106 der ITU-T Standard H.245 anzuwenden.

Es kann in einem speziellen Ausführungsbeispiel vorgesehen sein, das Mobilfunkgerät 1 nur mit der ersten Kamera 5, dem Video-Quellcodierer 81, dem Video-Kanalcodierer 82, der ersten Sende-/Empfangseinheit 91 und der ersten Sende-/Empfangsantenne 92 sowie den für die Funktion des Mobilfunkgerätes 1 notwendigen für die Beschreibung der Erfindung jedoch nicht erforderlichen und in Figur 1 nicht dargestellten Funktionsblöcken auszustatten. Die erste Zielstation 15 könnte dann beispielsweise nur den ersten Monitor 35, den Video-Quelldecodierer 86, den Video-Kanaldecodierer 87, die erste Sende-/Empfangseinheit 91 und die erste Sende-/Empfangsantenne 92 sowie die für die Funktion des Mobilfunkgerätes 1 notwendigen für die Beschreibung der Erfindung jedoch nicht erforderlichen und in Figur 1 nicht dargestellten Funktionsblöcke aufweisen. Über die Basisstation 25 kann dann ein von der ersten Kamera 5 aufgezeichnetes Videosignal zur ersten Zielstation 15 übertragen und dort am ersten Monitor 35 dargestellt werden. Eine solche Anordnung kann beispielsweise als Überwachungssystem eingesetzt werden, wobei das Mobilfunkgerät 1 und die erste Zielstation 15 lediglich eine Videocodierung und -decodierung nach dem ITU-T Standard H. 263 durchzuführen hätte und andere ITU-T Standards nicht im Mobilfunkgerät 1 und in der ersten Zielstation 15 realisiert werden müßten. Auf diese Weise könnte eine einfache Mobil-Zu-Mobil-Video-Verbindung realisiert werden.

Die Erfindung ist jedoch nicht auf die Verwendung des ITU-T Standard H.263 für Videoübertragung beschränkt. Eine Codierung und Decodierung von Videodaten kann auch mittels Videocodier-und -decodieralgorithmen gemäß den ISO- Standards (International Standardization Organization) MPEG 1, MPEG 2 und MPEG 4 realisiert werden (MPEG = Moving Picture Expert Group). Zur Kommunikation eines nach dem MPEG-Standard ausgebildeten Mobilfunkgerätes 1 mit anderen Zielstationen sollten diese auch nach dem MPEG-Standard ausgebildet sein oder beispielsweise in der Basisstation 25 eine entsprechende Umwandlung der zwischen den Stationen zu übertragenden Daten zur Anpassung verschiedener Standards durchgeführt werden.

Werden beispielsweise Videodaten zwischen dem Mobilfunkgerät 1 und der ersten Zielstation 15 über die Basisstation 25 übertragen, so kann die volle zur Verfügung stehende Datenrate des UMTS - Standards von 2 MBit/s ausgenutzt werden. Diese Datenrate ist erheblich größer als die für GSM für diesen Zweck vorgesehene Datenrate von 9,6 kBit/s. Werden jedoch Videodaten vom Mobilfunkgerät 1 an die zweite Zielstation 20 des Festnetzes 45 übertragen, so muß die Datenrate bereits im Mobilfunkgerät 1 an die Datenrate des Festnetzes 45 angepaßt werden, die beispielsweise bei Verwendung eines als PSTN ausgebildeten Festnetzes 45 20 kBit/s beträgt. Eine höhere Videodatenrate im Mobilfunkgerät 1 würde keinen Sinn machen, da die Videodaten im Festnetz 45 nur mit der dort vorgesehenen Datenrate übertragen werden können. Die Datenrate von 20kBit/s ist dabei auf die Datenmenge von 200 Bit der datenkomprimierten Videodaten 113 im Mobilfunkgerät 1 bezogen, da die Fehlerschutz- und -erkennungsmaßnahmen nur für die Funkübertragung zwischen dem Mobilfunkgerät 1 und der Basisstation 25 vorgesehen sind.

Handelt es sich bei dem Festnetz 45 um ein analoges Festnetz, wie das beispielsweise beim PSTN der Fall ist, so wird der vom Datenbitstrommultiplexer 97 erzeugte Gesamtdatenbitstrom vor der Übertragung im Festnetz 45 analogisiert und nach Empfang in der zweiten Zielstation 20 beispielsweise vom Modem 119 wieder in einen digitalen Datenbitstrom umgewandelt.

Im beschriebenen Ausführungsbeispiel erfolgt die Erzeugung des Gesamtdatenbitstroms in der Basisstation 25. Normalerweise sind der Basisstation 25 jedoch vor dem Übergang ins Festnetz 45 noch viele weitere, in den Figuren nicht dargestellte Komponenten, beispielsweise ein Mobile Switching Centre (MSC), nachgeschaltet. Die Erzeugung des Gesamtdatenbitstroms kann daher auch außerhalb der Basisstation 25, jedoch noch vor dem Übergang in das Festnetz 45 erfolgen.

## Patentansprüche

1. Verfahren zur Übertragung von Videodaten mit Mobilfunkgeräten (1, 15), **dadurch gekennzeichnet, daß** durch eine Kamera (5) aufgezeichnete Videodaten in einem Mobilfunkgerät (1) codiert werden, daß eine Datenrate der codierten Videodaten an die Datenrate eines der Übertragung der Videodaten zugeordneten ersten physikalischen Datenkanals (10) angepaßt wird und daß die codierten Videodaten mit der angepaßten Datenrate in dem ersten physikalischen Datenkanal (10) vom Mobilfunkgerät (1) an eine Zielstation (15, 20) adressiert abgestrahlt werden.

2. Verfahren nach Anspruch 1, dadurch gekennzeichnet, daß die Videodaten in dem ersten physikalischen Datenkanal (10) von einer Basisstation (25) empfangen werden, daß die Videodaten von der Basisstation (25) in einem vierten physikalischen Datenkanal (65) an eine erste Zielstation (15) übertragen werden und daß die Videodaten in dem vierten physikalischen Datenkanal (65) von der ersten Zielstation (15) empfangen und nach Decodierung an einem ersten Monitor (35) dargestellt werden.

3. Verfahren nach Anspruch 1 oder 2, dadurch gekennzeichnet, daß die Videodaten in dem ersten physikalischen Datenkanal (10) von der Basisstation (25) empfangen werden, daß die Videodaten von der Basisstation (25) über eine Datenleitung (40) an ein Festnetz (45) übertragen werden, daß die Videodaten über das Festnetz (45) an eine zweite Zielstation (20) übertragen werden und daß die Videodaten von der zweiten Zielstation (20) empfangen und nach Decodierung an einem zweiten Monitor (50) dargestellt werden.

4. Verfahren nach Anspruch 1, 2 oder 3, dadurch gekennzeichnet, daß durch ein Mikrophon (55) aufgezeichnete Audiodaten im Mobilfunkgerät (1) codiert werden, daß eine Datenrate der codierten Audiodaten an die Datenrate eines der Übertragung der Audiodaten zugeordneten zweiten physikalischen Datenkanals (30) angepaßt wird und daß die codierten Audiodaten mit der angepaßten Datenrate in dem zweiten physikalischen Datenkanal (30) vom Mobilfunkgerät (1) an eine der Zielstationen (15, 20) adressiert abgestrahlt werden.

5. Verfahren nach Anspruch 4, dadurch gekennzeichnet, daß die Audiodaten in dem zweiten physikalischen Datenkanal (30) von der Basisstation (25) empfangen werden, daß die Audiodaten von der Basisstation (25) in einem fünften physikalischen Datenkanal (75) an die erste Zielstation (15) übertragen werden und daß die Audiodaten in dem fünften physikalischen Datenkanal (75) von der ersten Zielstation (15) empfangen und nach Decodierung von einem Lautsprecher (70) wiedergegeben werden.

6. Verfahren nach Anspruch 4 oder 5, dadurch gekennzeichnet, daß die Audiodaten in dem zweiten physikalischen Datenkanal (30) von der Basisstation (25) empfangen werden, daß die Audiodaten für eine Übertragung im Festnetz (45) transcodiert werden, daß die transcodierten Audiodaten mit den Videodaten in einen gemeinsamen Datenbitstrom gemultiplext und über die Datenleitung (40) an das Festnetz (45) weitergeleitet werden, daß der Datenbitstrom über das Festnetz (45) an die zweite Zielstation (20) übertragen wird, daß der Datenbitstrom in der zweiten Zielstation (20) demultiplext wird und daß die auf diese Weise wieder getrennten Audio- und Videodaten von der zweiten Zielstation (20) decodiert und audiovisuell wiedergegeben werden.

7. Verfahren nach einem der vorherigen Ansprüche, dadurch gekennzeichnet, daß mindestens ein weiterer Datendienst, insbesondere Fax, vorgesehen ist und daß die zugehörigen Daten in einem dritten physikalischen Datenkanal (60) vom Mobilfunkgerät (1) abgestrahlt werden.

8. Verfahren nach Anspruch 7, dadurch gekennzeichnet, daß die Daten in einem sechsten physikalischen Datenkanal (80) von der Basisstation (25) an die erste Zielstation (15) übertragen werden.

9. Verfahren nach Anspruch 7 oder 8, dadurch gekennzeichnet, daß die Daten vor dem Übergang in das Festnetz (45) zumindest mit den Videodaten in einen gemeinsamen Datenbitstrom gemultiplext und über die Datenleitung (40) an das Festnetz (45) weitergeleitet werden.

10. Verfahren nach einem der vorherigen Ansprüche, dadurch gekennzeichnet, daß die Videodaten im Mobilfunkgerät (1) nach zumindest einem Fehlerschutzverfahren kodiert werden.

11. Verfahren nach einem der Ansprüche 4 bis 10, dadurch gekennzeichnet, daß die Audiodaten im Mobilfunkgerät (1) nach einem Fehlerschutzverfahren kodiert werden.

12. Verahren nach einem der vorherigen Ansprüche, dadurch gekennzeichnet, daß die Datenrate der Videodaten in dem Mobilfunkgerät (1) für die Übertragung im ersten physikalischen Datenkanal (10) auf 64kBit/s angepaßt wird.

13. Verfahren nach einem der vorherigen Ansprüche, dadurch gekennzeichnet, daß die Datenrate der Audiodaten in dem Mobilfunkgerät (1) für die Übertragung im zweiten physikalischen Datenkanal (30) auf 32kBit/s angepaßt wird.
